# EUROPEAN PATENT APPLICATION

(11) **EP 4 464 207 A1**
(43) Date of publication of application: **20.11.2024**
(21) Application number: 24176719.3
(22) Date of filing: 17.05.2024
(51) Int. Cl.: A47J 31/44

(54) **COFFEE MACHINE DRIP TRAY WITH INTEGRATED STORAGE**

(30) Priority: 18.05.2023 US 202318198887
(71) Applicant: Whirlpool Corporation, Benton Harbor, MI 49022 (US)
(72) Inventor: Yin, Zhaoyi, Benton Harbor, Michigan, 49022 (US)
(74) Representative: Eisenführ Speiser

(57) **Abstract**

A beverage preparation appliance (10) includes a housing (12) having a base (14) defining a cavity (16) having an open side (18) and a dispensing portion (20) supported on the base (14) and defining a beverage outlet location (22) suspended above the base (14). The appliance (10) further includes a drip tray body (24) defining a perimeter side wall (26) and an interior wall (28) separating an interior (30) of the tray body (24) within the perimeter side wall (26) into a reservoir area (32) and a storage area (34). The drip tray body (24) is partially received within the cavity (16) of the base (14) through the open side (18) thereof with the storage area (34) positioned within the cavity (16) and at least a portion of the reservoir area (32) being positioned outside the cavity (16) underlying the beverage outlet location (22).

## Description

### BACKGROUND OF THE DISCLOSURE

The present disclosure generally relates to a coffee making appliance, and more specifically, to an espresso machine or the like with a drip tray having integrated storage for one or more accessories.

Various types of appliances for making and dispensing liquid beverages may include a so-called "drip tray" that is configured to support a container thereon, while allowing liquid to drain into a reservoir. In variations of such appliances adapted for home use, where they are not typically connected to a drain line, drip trays are typically removable and are configured to attach with a base of the appliance in, for example, a sliding arrangement. Some such appliances include coffee makers. In particular, single-serving coffee makers, such as espresso machines, and pod or capsule based coffee makers, may include a drip tray, as they do not include dispensing valves typically associated with carafe-based drip coffee makers. Such coffee makers also include various accessories that must be stored when not in use.

### SUMMARY OF THE DISCLOSURE

According to one aspect of the present disclosure, a beverage preparation appliance includes a housing having a base defining a cavity having an open side and a dispensing portion supported on the base and defining a beverage outlet location suspended above the base. The appliance further includes a drip tray body defining a perimeter side wall and an interior wall separating an interior of the tray body within the perimeter side wall into a reservoir area and a storage area. The drip tray body is partially received within the cavity of the base through the open side thereof with the storage area positioned within the cavity and at least a portion of the reservoir area being positioned outside the cavity underlying the beverage outlet location.

According to another aspect of the present disclosure, a beverage preparation appliance includes a housing having a base defining a cavity having an open side and a dispensing portion supported on the base and defining a beverage outlet location suspended above the base. The appliance further includes a drip tray body defining a perimeter side wall and an interior wall defining a storage area within a portion of the drip tray body. The drip tray body is partially received within the cavity of the base through the open side thereof with the storage area positioned within the cavity and a remaining portion of the drip tray body positioned beneath the dispensing portion underlying the beverage outlet location.

According to yet another aspect of the present disclosure, a beverage preparation appliance includes a housing having a base defining a cavity with an open side and a dispensing portion supported on the base and defining a beverage outlet location suspended above the base. A portafilter holder is selectively couplable with the dispensing portion of the housing in a supported arrangement with respect to the base with an outlet of the portafilter positioned within the beverage outlet location. The appliance further includes a drip tray body defining a perimeter side wall and an interior wall defining a storage area within a portion of the drip tray body. The drip tray body is partially received within the cavity of the base through the open side thereof with the storage area positioned within the cavity and a remaining portion of the drip tray body positioned beneath the dispensing portion so as to underlie the beverage outlet location. The storage area is sized to receive a portafilter basket alternately receivable in the portafilter holder.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a perspective view of a beverage preparation appliance in the form of an espresso machine according to an aspect of the disclosure;
FIG. 2 is a perspective view of the espresso machine of FIG. 1 with a drip tray disassembled therefrom, the drip tray including a reservoir area and a separate, integral storage area therein;
FIG. 3 is an assembly view of the drip tray showing various accessories that may be stored therein and otherwise used with the espresso machine;
FIG. 4 is a top plan view of the drip tray shown storing accessories associated with the espresso machine; and
FIG. 5 is an exploded view of the drip tray assembly showing additional aspects thereof.

The components in the figures are not necessarily to scale, emphasis instead being placed upon illustrating the principles described herein.

### DETAILED DESCRIPTION

The present illustrated embodiments reside primarily in combinations of method steps and apparatus components related to an appliance for preparing a hot beverage. Accordingly, the apparatus and components have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

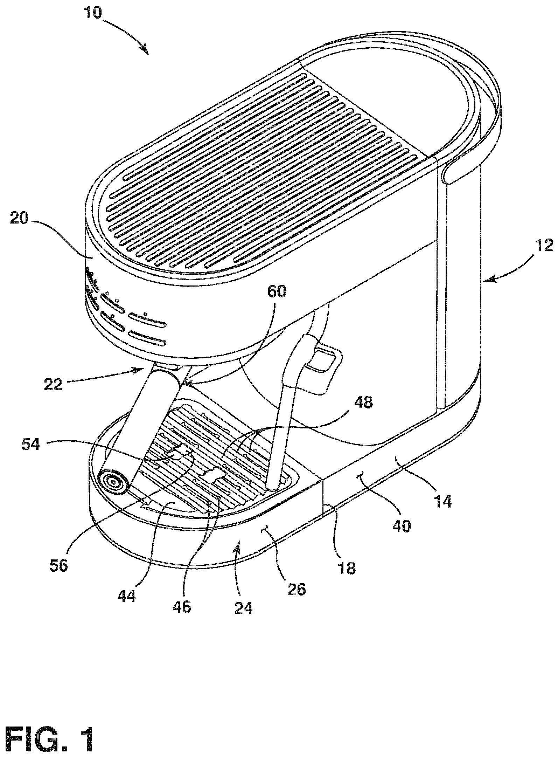

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

Ordinal modifiers (i.e., "first", "second", etc.) may be used to distinguish between various structures of the disclosed beverage preparation appliance in various contexts, but that such ordinals are not necessarily intended to apply to such elements outside of the particular context in which they are used and that, in various aspects different ones of the same class of elements may be identified with the same, context-specific ordinal. In such instances, other particular designations of the elements are used to clarify the overall relationship between such elements. Ordinals are not used to designate a position of the elements, nor do they exclude additional, or intervening, non-ordered elements or signify an importance or rank of the elements within a particular class.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

For purposes of this disclosure, the terms "about", "approximately", or "substantially" are intended to mean that a value of a parameter is close to a stated value or position. However, minor differences may prevent the values or positions from being exactly as stated. Thus, unless otherwise noted, differences of up to ten percent (10%) for a given value are reasonable differences from the ideal goal of exactly as described. In many instances, a significant difference can be when the difference is greater than ten percent (10%), except as where would be generally understood otherwise by a person of ordinary skill in the art based on the context in which such term is used.

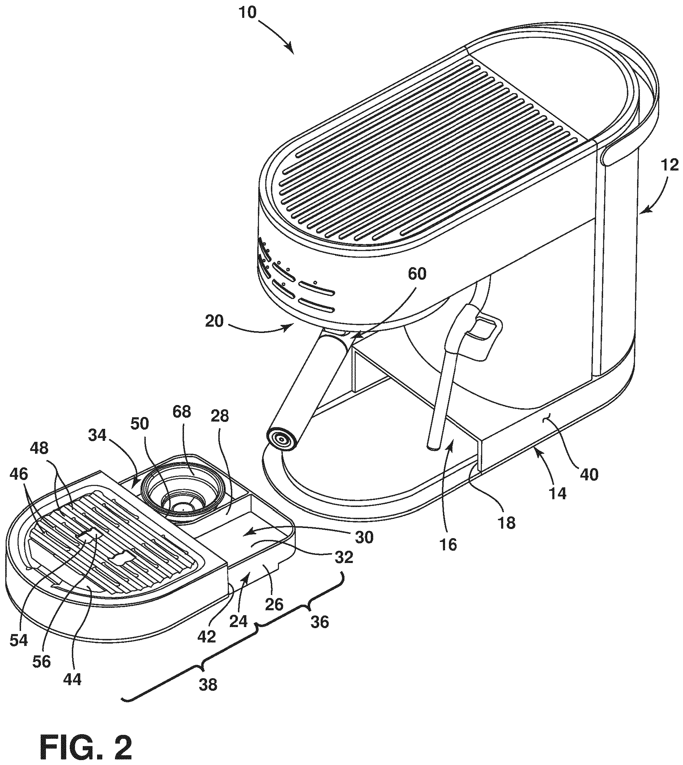

Referring to FIGS. 1-5, reference numeral 10 generally designates a beverage preparation appliance. More particularly, the illustrated beverage preparation appliance (referred to generally herein as the "appliance") is in the form of an espresso machine, having various features for the specific purpose of brewing a desired quantity of espresso using steam and pressurized hot water, as well as for preparing frothed milks, as discussed in relevant detail below. As can be appreciated, aspects of the present disclosure can be utilized in connection with other beverage preparation and/or dispensing appliances, including but not limited to various forms of coffee makers or other appliances for brewing hot beverages. As described herein, the appliance 10 includes a housing 12 having a base 14 defining a cavity 16 having an open side 18. The housing 12 also has a dispensing portion 20 supported on the base 14 and defining a beverage outlet location 22 suspended above the base 14. The appliance 10 further includes a drip tray body 24 defining a perimeter side wall 26 and an interior wall 28 (FIGS. 2-5). The interior wall 28 separates an interior 30 of the tray body 24 within the perimeter side wall 26 into a reservoir area 32 and a storage area 34. The drip tray body 24 is partially received within the cavity 16 of the base 14 through the open side 18 thereof with the storage area 34 positioned within the cavity 16 and at least a portion of the reservoir area 32 being positioned outside the cavity 16 underlying the beverage outlet location 22.

In one aspect, the storage area 34 can provide a location within the appliance 10 in which the user can place any accessories provided, or otherwise useable, therewith. Various examples of such accessories are discussed further below. The incorporation of the storage area 34 into the drip tray body 24 takes advantage of the configuration of the drip tray body 24 as being removably coupleable with the base 14 of the appliance 10 by including a rear extension 36 that slides into the cavity 16 through the opening 46. In various implementations, the rear extension 36 my facilitate coupling of the drip tray body 24 by engaging with the portion of the cavity 16 adjacent the open side 18 by a press-fit arrangement or a snap-fit arrangement facilitated by features generally understood in the art. In this manner, a portion of the reservoir area 32 may extend into the cavity 16 by way of being positioned within the rear extension 36. In some further implementations, the rear extension 36 can define additional structures, such as pour spouts, baffles, and the like that may be understood as relating to the storage and removal of fluid from the reservoir area 32. The inclusion of the above-described portion of the reservoir area 32 within the rear extension 36 allows for an increased capacity of the reservoir area 32 by leveraging an area within the base 14 that may otherwise be empty or can otherwise be configured to accommodate such an area without a significant negative impact on the functionality of the appliance 10. In this manner, the present appliance 10 can further leverage such available area by reconfiguring the positioning of the portion of the reservoir area 32 within the rear extension 36 to accommodate the separate storage area 34. In one aspect, this reconfiguration can be accomplished without otherwise reducing the capacity of the reservoir area 32 by, for example, structuring the rear extension 36 to extend farther into the cavity 16. The base 14 can be reconfigured to accommodate such additional extension by, for example, enlarging the cavity 16.

The drip tray body 24 also defines a forward portion 38 that is configured to extend generally flush with a profile 40 of the base 14 when the rear extension 36 of the drip tray body 24 is partially received within the cavity 16. In this manner, the perimeter wall 26 of the drip tray body 24 can step inward between the portions of the perimeter wall 26 within the forward portion 38 and the rear extension 36 of the drip tray body 24. The step 42 defined between such portions can act as a stop for the assembly of the drip tray body 24 with the base 14. In this manner, the drip tray body 24 can be slidably engaged with the base 14 such that the drip tray body 24 can be slid outwardly (as shown in FIG. 2) to disengage the rear extension 36 from the cavity 16 such that the reservoir area 32 can be emptied and/or items within the storage are 34 can be accessed. Subsequently, the drip tray body 24 can be reassembled with the base 14 by alignment of the rear extension 36 with the open side 18 of the cavity 16 and by sliding the rear extension 36 into position within the cavity 16 until the step 42 contacts the area of the base 14 surrounding the open side 18 (which may coincide with engagement of any additional retention features, as discussed above).

As shown in the figures, appliance 10 can further include a grate 44 positionable over a portion of the reservoir area 32 and supported on the perimeter side wall 26 of the drip tray body 24. In this manner, the present appliance 10 is configured to support one or more containers (such as cups, mugs, glasses, a carafe, or the like) below the beverage outlet location 22 such that the appliance 10 can dispense the desired beverage from the dispensing portion 20 into the one or more containers, which can then be removed from the grate 44 for consumption with any residual undispensed beverage that may subsequently escape from the beverage outlet location 22 passing though an opening 46 in the grate 44 and collecting in the reservoir area 32. In one implementation, the grate 44 can be of stamped sheet metal, including aluminum, stainless steel, or the like, with perforated openings and integrated ribs 48 to provide for the draining and supporting effects discussed above. The grate 44 can also be configured to indicate positioning of the container that generally corresponds with the beverage outlet location 22.

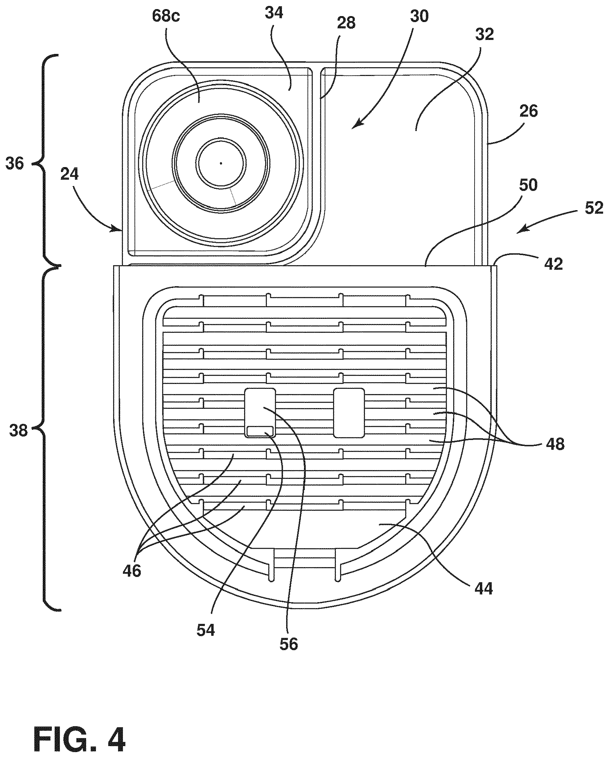

The grate 44 can define a rearward free edge 50 that spans the width of the forward portion 38 between the corresponding side portions of the perimeter wall 26. In this manner, the rearward free edge 50 is generally unsupported between the portions of the perimeter wall 26 and can be configured (including by the stamped arrangement and ribs 48 thereof) so that the grate 44, overall, can sufficiently support any container placed thereon. As can be seen in FIG. 4, the free edge 50 can be generally aligned with the steps 42 in the perimeter wall 26 such that it is positioned in proximity to (e.g., within about 1 mm) or in contact with the base 14 at the open side 18 of the cavity 16 when the grate 44 is in position on the drip tray body 24 when assembled with the base 14, as discussed above. As further shown in FIG. 4, the interior wall 28 that separates the storage area 34 from the reservoir area 32 is positioned rearward of the steps 42 and the free edge 50 such that the entirety of the storage area 34 is positioned within the cavity 16 and is not covered by grate 44. This arrangement may help prevent liquid entering the reservoir through one of the openings 46 in the grate 44 from inadvertently entering the storage area 34. In this respect, it is noted that many of the items that may be intended for storage within the storage area 34 may be configured for use with water or otherwise in wet environments such that the arrangement of the storage area 34 within the drip tray body 24 may not be such that the storage area 34 is completely sealed from liquid ingress, but is configured to reasonably limit the entry of liquid to maintain a generally clean state of the items therein.

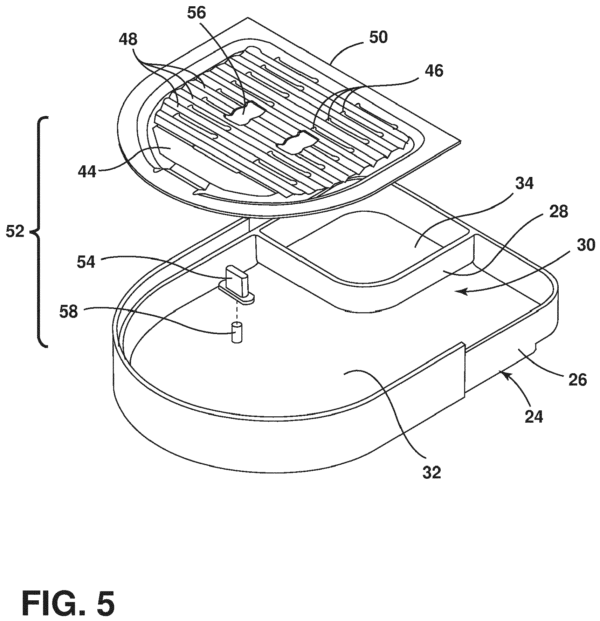

As further shown in FIG. 5, the drip tray body 24 and the grate 44 can be configured to mutually align or be otherwise assemblable together so as to result in a drip tray assembly 52 configured for selectively assembly with the base 14 of the appliance housing 12 as a unit. In some aspects, the grate 44 may simply rest on the drip tray body 24 in a mutually-defined alignment. In other implementations, there may be a snap fit or press fit arrangement between the grate 44 and drip tray body 24 that results in the elements coupling together. The drip tray assembly 52 can further include a fluid level indicator 54 received within the reservoir area 32 of the drip tray body 24 and configured to partially extend through an aperture 56 in the grate 44. As shown, the fluid level indicator 54, which can be configured to float (such as by including an at least partially hollow interior), can be movably received on a post 58 that extends upwardly from the drip tray body 24 within the reservoir area 32. In this manner, the fluid level indicator 54 can be generally level with or positioned below the surface of the grate 44 when no fluid is present in the reservoir area 32. The fluid level indicator 54 can be raised in its position on the post 58 such that a portion thereof protrudes from the aperture 56 as fluid accumulates in the reservoir area 32 such that the fluid level can be assessed by the amount of the fluid level indicator 54 that is visible above the grate 44.

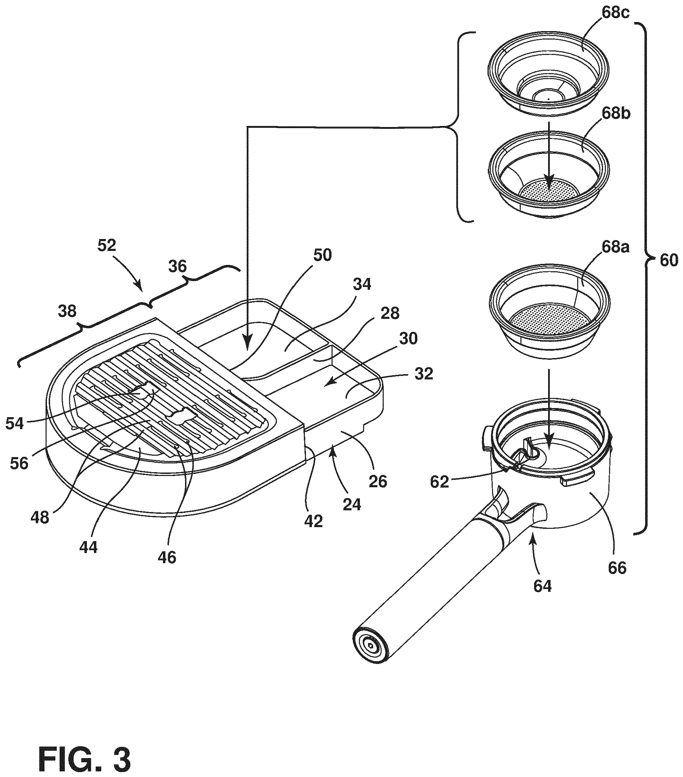

As discussed above, the appliance 10 can be an espresso machine where the dispensing portion 20 of the housing 12 is configured to receive a portafilter unit 60 in a supported arrangement with respect to the base 14 such that one or two outlets 62 of the portafilter unit 60 is positioned within the beverage outlet location 22. As is common with espresso machines, the portafilter unit 60 includes a portafilter handle 64 that includes a body 66 configured to receive a portafilter basket 68 therein. In operation, the user adds finely-ground coffee to the portafilter basket 68, which is assembled with the portafilter handle 64, and compacts the grounds to the desired level within the portafilter basket 68. The portafilter unit 60 is then secured to the dispensing portion 20 (typically by a twist-lock mechanism) and the brewing cycle is activated to cause the desired amount of espresso to be dispensed from the outlet 62 into one or two mugs or glasses positioned on the grate 44. In various aspects of this arrangement, the espresso machine 10 may include multiple portafilter baskets 68 that are interchangeably receivable within the body 66 of the portafilter handle 64, as shown in FIG. 3. In general such baskets 68 may vary in configuration to correspond with different brewing configurations or preferences. In some examples, the espresso machine 10 may include a "single shot" portafilter basket 68a, configured to receive about 10 g of compacted ground coffee for brewing about 1 fl. oz of espresso and a "double shot" portafilter basket 68b, configured to receive about 20 g of compacted ground coffee for brewing about 2 fl. oz of espresso. Additionally, the espresso machine 10 can include or otherwise be useable with one or more "double wall" portafilter baskets 68c that can be configured in a single or double shot arrangement. In this respect, an espresso machine 10 of the type described herein may include up to four different portafilter baskets 68, only one of which may be used at a time. In this manner, the storage area 34 of the drip tray body 24 can be sized to receive a portafilter basket 68 therein. In a further aspect, the storage area 34 may be sized and configured to receive up to three nested portafilter baskets 68, including various ones of those described above, when not in use in connection with the portafilter handle 64. As such, the storage area 34 can be, for example, about 7 cm by 7 cm (+/- 10%). In some aspects, the space within the cavity 16 can be sized to accommodate the nested portafilter baskets 68 therein, such as by being at least about 4 cm tall. In this respect, the interior wall 28 may not extend through the entire height of the cavity 16, but may be sized to correspond with the maximum fluid level of the reservoir area 32 (e.g., by being between about 1.5 cm and 2 cm tall), plus an additional amount to prevent water spilling into the storage area 34 under usual conditions.

As can be appreciated, the storage area 34 can be sized to receive items in addition to the portafilter basket(s) 68, described above. In various examples, the storage area 34 can also be sized to receive various cleaning utensils (brushes and the like), cleaning tablets, or the like. Still further, various other types of other coffee-making appliances, such as single-serving coffee machines, may include drip trays that can be similarly adapted to store accessories associated therewith, such as cleaning brushes or various "pod" adapters or the like.

The invention disclosed herein is further summarized in the following paragraphs and is further characterized by combinations of any and all of the various aspects described therein.

According to another aspect of the present disclosure, a beverage preparation appliance includes a housing having a base defining a cavity having an open side and a dispensing portion supported on the base and defining a beverage outlet location suspended above the base. The appliance further includes a drip tray body defining a perimeter side wall and an interior wall separating an interior of the tray body within the perimeter side wall into a reservoir area and a storage area. The drip tray body is partially received within the cavity of the base through the open side thereof with the storage area positioned within the cavity and at least a portion of the reservoir area being positioned outside the cavity underlying the beverage outlet location.

The appliance according to ¶ [0029] can further include a grate positionable over a portion of the reservoir area and supported on the perimeter side wall of the drip tray body.

In the appliance according to ¶ [0030], the drip tray body and the grate can be included in a drip tray assembly configured for selectively assembly with the housing as a unit.

In the appliance according to ¶ [0031], the drip tray assembly can further include a fluid level indicator received within the reservoir of the drip tray body and configured to partially extend through an aperture in the grate.

In the appliance according to any one of ¶¶ [0029]-[0032], the drip tray body can define a forward portion and a rear extension, the rear extension being receivable within the cavity and the forward portion extending generally flush with a profile of the base when the drip tray body is partially received within the cavity.

In the appliance according to ¶ [0033], the storage area can be positioned within the rear extension.

In the appliance according to any one of ¶¶ [0029]-[0034], the dispensing portion of the housing can be configured to receive a portafilter holder in a supported arrangement with respect to the base such that an outlet of the portafilter being positioned within the beverage outlet location, and the storage area of the drip tray body can be sized to receive a portafilter basket therein.

According to yet another aspect, a beverage preparation appliance includes a housing having a base defining a cavity having an open side and a dispensing portion supported on the base and defining a beverage outlet location suspended above the base. The appliance further includes a drip tray body defining a perimeter side wall and an interior wall defining a storage area within a portion of the drip tray body. The drip tray body is partially received within the cavity of the base through the open side thereof with the storage area positioned within the cavity and a remaining portion of the drip tray body positioned beneath the dispensing portion underlying the beverage outlet location.

In the appliance according to ¶ [0036], the interior wall may separate a reservoir area from the storage area within an interior of the tray body, at least a portion of the reservoir area being positioned outside the cavity underlying the beverage outlet location.

The appliance according to ¶ [0037] can further include a grate positionable over a portion of the reservoir area and supported on the perimeter side wall of the drip tray body.

In the appliance according to ¶ [0038], the drip tray body and the grate can be included in a drip tray assembly configured for selectively assembly with the housing as a unit.

In the appliance according to ¶ [0039], the drip tray assembly can further include a fluid level indicator received within the reservoir of the drip tray body and configured to partially extend through an aperture in the grate.

In the appliance according to any one of ¶¶ [0036]-[0039], the drip tray body may define a forward portion and a rear extension, the rear extension being receivable within the cavity and the forward portion extending generally flush with a profile of the base when the drip tray body is partially received within the cavity.

In the appliance according to ¶ [0041], the storage area can be positioned within the rear extension.

According to yet another aspect, a beverage preparation appliance includes a housing having a base defining a cavity with an open side and a dispensing portion supported on the base and defining a beverage outlet location suspended above the base. A portafilter holder is selectively couplable with the dispensing portion of the housing in a supported arrangement with respect to the base with an outlet of the portafilter positioned within the beverage outlet location. The appliance further includes a drip tray body defining a perimeter side wall and an interior wall defining a storage area within a portion of the drip tray body. The drip tray body is partially received within the cavity of the base through the open side thereof with the storage area positioned within the cavity and a remaining portion of the drip tray body positioned beneath the dispensing portion so as to underlie the beverage outlet location. The storage area is sized to receive a portafilter basket alternately receivable in the portafilter holder.

The appliance according to ¶ [0043] can further include first and second portafilter baskets, each being alternately receivable in a respective one of the storage area and the portafilter holder.

In the appliance according to ¶ [0044], the first and second portafilter baskets may vary with at least one of an interior volume or a dispensing configuration.

In the appliance according to any one of ¶¶ [0043]-[0045], the interior wall may separate a reservoir area from the storage area within an interior of the tray body, at least a portion of the reservoir area being positioned outside the cavity underlying the beverage outlet location.

The appliance according to ¶ [0046] can further include a grate positionable over a portion of the reservoir area and supported on the perimeter side wall of the drip tray body.

In the appliance according to ¶ [0047], the drip tray body and the grate can be included in a drip tray assembly configured for selectively assembly with the housing as a unit.

It will be understood by one having ordinary skill in the art that construction of the described disclosure and other components is not limited to any specific material. Other exemplary embodiments of the disclosure disclosed herein may be formed from a wide variety of materials, unless described otherwise herein.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A beverage preparation appliance (10), comprising:
a housing (12) including:
a base (14) defining a cavity (16) having an open side (18); and
a dispensing portion (20) supported on the base (14) and defining a beverage outlet location (22) suspended above the base (14); and
a drip tray body (24) defining a perimeter side wall (26) and an interior wall (28) separating an interior (30) of the tray body (24) within the perimeter side wall (26) into a reservoir area (32) and a storage area (34), the drip tray body (24) being partially received within the cavity (16) of the base (14) through the open side (18) thereof with the storage area (34) positioned within the cavity (16) and at least a portion of the reservoir area (32) being positioned outside the cavity (16) underlying the beverage outlet location (22).

2. The appliance (10) of claim 1, further including a grate (44) positionable over a portion of the reservoir area (32) and supported on the perimeter side wall (26) of the drip tray body (24).

3. The appliance (10) of claim 2, wherein the drip tray body (24) and the grate (44) are included in a drip tray assembly (52) configured for selectively assembly with the housing (12) as a unit.

4. The appliance (10) of claim 3, wherein the drip tray assembly (52) further includes a fluid level indicator (54) received within the reservoir area (32) of the drip tray body (24) and configured to partially extend through an aperture (56) in the grate (44).

5. The appliance (10) of any one of claims 1 to 4, wherein the drip tray body (24) defines a forward portion (38) and a rear extension (36),

6. The appliance (10) of claim 5, wherein the rear extension (36) is receivable within the cavity (16) and the forward portion (38) extends generally flush with a profile of the base (40) when the drip tray body (24) is partially received within the cavity (16).

7. The appliance (10) of either claim 5 or claim 6, wherein the storage area (34) is positioned within the rear extension (36).

8. The appliance (10) of any one of claims 1 to 7, wherein:
the dispensing portion (20) of the housing (12) is configured to receive a portafilter holder (60) in a supported arrangement with respect to the base (14) such that an outlet (62) of the portafilter holder (60) is positioned within the beverage outlet location (22);

9. The appliance (10) of claim 8, wherein the storage area (34) of the drip tray body (24) is sized to receive a portafilter basket (68) therein.

10. The appliance of claim 9, wherein the portafilter basket (68) alternately receivable in the portafilter holder (60).

11. The appliance (10) of claim 10, further including first and second portafilter baskets (68), each being alternately receivable in a respective one of the storage area (34) and the portafilter holder (60).

12. The appliance (10) of claim 11, wherein the first and second portafilter basket (68) vary with at least one of an interior (30) volume or a dispensing configuration.
